(19)

Europäisches Patentamt
European Patent Office
Office européen des brevets

(11) **EP 2 660 356 A1**

(12) **EUROPEAN PATENT APPLICATION**
published in accordance with Art. 153(4) EPC

(43) Date of publication:
**06.11.2013 Bulletin 2013/45**

(21) Application number: **11854409.7**

(22) Date of filing: **28.12.2011**

(51) Int Cl.:
*C25B 9/00* (2006.01)　　*C01B 3/00* (2006.01)
*C07C 5/10* (2006.01)　　*C07C 13/18* (2006.01)
*C25B 3/04* (2006.01)　　*C07B 61/00* (2006.01)

(86) International application number:
**PCT/JP2011/080487**

(87) International publication number:
**WO 2012/091128 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010  JP 2010293684**

(71) Applicants:
- **JX Nippon Oil & Energy Corporation**
  **Chiyoda-ku**
  **Tokyo 100-8162 (JP)**
- **The University of Tokyo**
  **Bunkyo-Ku**
  **Tokyo 113-8654 (JP)**

(72) Inventors:
- **SATO Yasushi**
  **Tokyo 100-8162 (JP)**

- **KOBORI Yoshihiro**
  **Tokyo 100-8162 (JP)**
- **MAEKAWA Shunsuke**
  **Tokyo 100-8162 (JP)**
- **DOMEN Kazunari**
  **Tokyo 113-8654 (JP)**
- **KUBOTA Jun**
  **Tokyo 113-8654 (JP)**
- **HIGUCHI Masakazu**
  **Tokyo 113-8654 (JP)**
- **TAKANABE Kazuhiro**
  **Tokyo 113-8654 (JP)**

(74) Representative: **Grünecker, Kinkeldey, Stockmair & Schwanhäusser**
  **Leopoldstrasse 4**
  **80802 München (DE)**

(54) **ORGANIC COMPOUND HYDROGENATION DEVICE AND HYDROGENATION METHOD**

(57)　　The invention provides an organic compound(s) hydrogenation device that allows hydrogen derived from water to be stored essentially without generating hydrogen gas. The organic compound hydrogenation device of the invention comprises an oxidation chamber that holds a water-containing electrolyte, a reduction chamber that holds an organic compound(s) with an unsaturated bond, an electrolyte membrane with ion permeability that separates the electrolyte held in the oxidation chamber from the organic compound(s) held in the reduction chamber, an oxidizing electrode that generates protons from the water held in the oxidation chamber, and a reducing electrode that hydrogenates the organic compound(s) held in the reduction chamber.

Fig.1

EP 2 660 356 A1

**Description**

**Technical Field**

The present invention relates to an organic compound hydrogenation device and hydrogenation method.

**Background Art**

Organic hydride systems are known as methods for storing and transporting hydrogen, wherein hydrogen gas is first reacted with benzene, toluene or the like to obtain a cyclic saturated hydrocarbon, and the product is then transported to an energy consumption area and hydrogen is generated at the consumption area (see Patent Literatures 1 to 4 and Non-Patent Literature 1).

**Citation List**

**Patent Literature**

[Patent Literature 1] Japanese Unexamined Patent Application Publication No. 2003-045449
[Patent Literature 2] Japanese Unexamined Patent Application Publication No. 2005-126288
[Patent Literature 3] Japanese Unexamined Patent Application Publication No. 2005-239479
[Patent Literature 4] Japanese Unexamined Patent Application Publication No. 2005-511075

**Non-Patent Literature**

[Non-Patent Literature 1] Ichikawa Masaru, J. Jpn. Inst. Energy, Vol.85, 517(2006)

**Summary of Invention**

**Technical Problem**

When a process for fixing renewable energy by an organic hydride system is assembled using conventional technology, it requires a two-stage step of first accomplishing electrolysis of water using electric power obtained by electric power generation from the renewable energy, and hydrogenation of the organic hydride material using the obtained hydrogen. In order to accomplish this, however, it is necessary to separately provide not only a generator of hydrogen gas by electrolysis of water, but also a device for hydrogenation of unsaturated compounds with the hydrogen gas obtained by the electrolysis. In addition, since hydrogenation is generally carried out at high pressure, complicated safety measures must be taken for the hydrogenation reactor as well, and a complex device is therefore required. Thus, conventional organic hydride systems that require a two-stage reaction of water electrolysis and unsaturated compound (s) hydrogenation have been associated with the problems of low efficiency and large equipment sizes.

It is an object of the present invention, which has been accomplished in light of these problems, to provide an organic compound hydrogenation device and hydrogenation method that allow hydrogen to be stored essentially without generating hydrogen gas.

**Solution to Problem**

The hydrogenation device for organic compound(s) according to a first aspect of the invention comprises an oxidation  chamber, a reduction chamber, an electrolyte membrane, an oxidizing electrode and a reducing electrode. The oxidation chamber holds a water-containing electrolyte. The reduction chamber holds an organic compound(s) with an unsaturated bond (unsaturated bonds). The organic compound(s) with an unsaturated bond will hereunder sometimes be referred to simply as "unsaturated compound(s)". The electrolyte membrane separates the electrolyte held in the oxidation chamber from the organic compound(s) held in the reduction chamber, and it is ion-permeable. The oxidizing electrode generates protons from the water held in the oxidation chamber. The reducing electrode hydrogenates the organic compound(s) held in the reduction chamber.

The hydrogenation device for organic compound(s) according to the second aspect of the invention comprises an oxidation chamber, a reduction chamber, a proton-conductive electrolyte membrane, an oxidizing electrode and a reducing electrode. The oxidation chamber holds a water-containing electrolyte. The reduction chamber holds an organic compound(s) with an unsaturated bond (unsaturated bonds). The electrolyte membrane separates the interior of the oxidation chamber from the interior of the reduction chamber. The oxidizing electrode is situated inside the oxidation chamber. The reducing electrode is adjacent to the electrolyte membrane and contacts with the organic compound(s) in the reduction chamber to hydrogenate the organic compound(s).

Preferably, the hydrogenation device according to the first aspect and the second aspect of the invention comprises a membrane-electrode assembly (MEA) having an electron collector layer that allows permeation of the organic compound(s), the reducing electrode and the electrolyte membrane, wherein the reducing electrode is situated between the electron collector layer and the electrolyte membrane, the electrolyte membrane covers the electron collector layer and the reducing electrode, and the electrolyte membrane has an opening exposing the section of the side of the electron collector layer opposite the reducing electrode.

Preferably, the hydrogenation device according to the first aspect and the second aspect of the invention comprises a membrane-electrode assembly having an electron collector layer that allows permeation of the organic compound(s), the reducing electrode formed on one side of the electron collector layer, and the electrolyte membrane covering the electron collector layer and the reducing electrode, wherein an opening is formed on a section of the electrolyte membrane located on the side opposite the reducing electrode sandwiching the electron collector layer, the opening faces the inside of the reduction chamber, and the back side of the section of the electron collector layer on which the reducing electrode has been formed is exposed through the opening.

The hydrogenation device according to the first aspect and the second aspect of the invention may also comprise a power source that applies a voltage to the oxidizing electrode and the reducing electrode. The hydrogenation device according to the first aspect and the second aspect of the invention may also comprise a conductor wire that connects the oxidizing electrode and the power source, and a conductor wire that connects the reducing electrode and the power source.

The hydrogenation method for organic compound(s) according to the third aspect of the invention is a method wherein a hydrogenation device according to the first aspect or second aspect of the invention as described above is used to apply a voltage to the oxidizing electrode and the reducing electrode through the conductor wires, causing generation of oxygen at the oxidizing electrode and hydrogenation of the organic compound(s) at the reducing electrode.

In the hydrogenation method according to the third aspect of the invention, the organic compound(s) is preferably at least one selected from the group consisting of benzene, toluene, xylene, ethylbenzene, naphthalene, methylnaphthalene and tetralin.

In the hydrogenation method according to the third aspect of the invention, the organic compound(s) is preferably a liquid hydrocarbon that undergoes phase separation with water.

In the hydrogenation method according to the third aspect of the invention, the organic compound(s) and a hydride of the organic compound(s) (hydrogenation product) in the reduction chamber are both preferably present as liquids.

In the hydrogenation method according to the third aspect of the invention it is preferred to maintain inclusion of water into the reduction chamber at a minimum.

**Advantageous Effects of Invention**

According to the invention it is possible to provide an organic compound(s) hydrogenation device and hydrogenation method that allow hydrogen to be stored essentially without generating hydrogen gas.

**Brief Description of Drawings**

Fig. 1 is a simplified cross-sectional view of an organic compound hydrogenation device according to the second embodiment of the invention.
Fig. 2 is a magnified view of section II of Fig. 1.
Fig. 3 is a schematic view showing a fabrication process for a membrane-electrode assembly comprising a hydrogenation device according to the second embodiment of the invention.
Fig. 4 is a schematic view showing a fabrication process for a membrane-electrode assembly comprising a hydrogenation device according to the second embodiment of the invention.
Fig. 5 is a schematic view showing a fabrication process for a membrane-electrode assembly comprising a hydrogenation device according to the second embodiment of the invention.
Fig. 6 is a schematic view of the oxidizing electrode side of a membrane-electrode assembly comprising a hydrogenation device according to the second embodiment of the invention.

Fig. 7 is a schematic view of the reducing electrode side of a membrane-electrode assembly comprising a hydrogenation device according to the second embodiment of the invention.

Fig. 8 is a photograph of a hot press machine used in a hot press step carried out during the fabrication process for the membrane-electrode assembly used in an example of the invention.

Fig. 9 is a photograph of the membrane-electrode assembly used in the example of the invention.

Fig. 10 is a graph showing conducting time between the oxidizing electrode and reducing electrode, current, and integrated electric charge calculated from the integrated value of the current, for the example of the invention.

Fig. 11 is a simplified cross-sectional view of an organic compound hydrogenation device according to the first embodiment of the invention.

Fig. 12 is a magnified view of section XII of Fig. 11.

## Description of Embodiments

Preferred embodiments of the invention will now be described in detail. However, the present invention is not limited to the embodiments described below. Identical or similar parts will be indicated by like reference numerals. Also, the dimensional proportions depicted in the drawings are not necessarily limitative.

[First embodiment]

(Organic compound hydrogenation device and hydrogenation method)

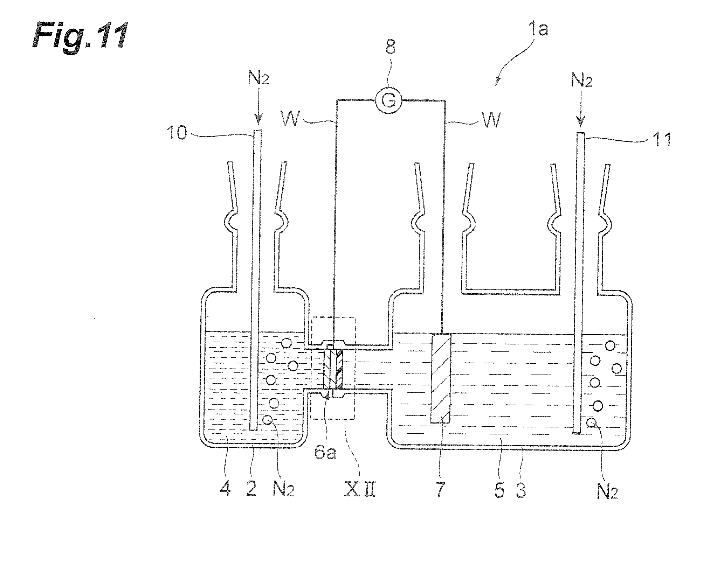

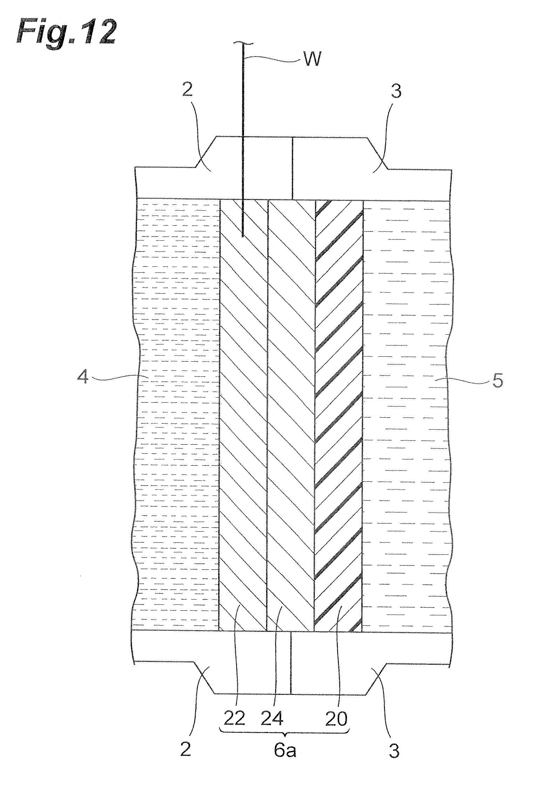

According to the first embodiment, the hydrogenation device 1a illustrated in Figs. 11 and 12 is used for hydrogenation of an unsaturated compound(s) 4 (an organic compound(s) with unsaturated bonds). Hydrogenation of the unsaturated compound(s) 4 may be carried out, for example, in an ordinary temperature, ordinary pressure environment.

The hydrogenation device 1a comprises a reduction chamber 2, an oxidation chamber 3, and a membrane-electrode assembly 6a partitioning the reduction chamber 2 and oxidation chamber 3. The reduction chamber 2 and oxidation chamber 3 are connected via the membrane-electrode assembly 6a.

Water or a water-containing supporting electrolyte 5 is present in the oxidation chamber 3. The supporting electrolyte 5 used may be one that is stable in terms of oxidation-reduction potential, and that has the necessary proton conductivity. For example, the supporting electrolyte 5 used may be a solid polymer electrolyte membrane imbibed with an aqueous sodium sulfate solution, dilute sulfuric acid and water. If necessary, an inert gas such as nitrogen may be supplied into the supporting electrolyte 5 from the exterior, through a gas tube 11.

The oxidizing electrode 7 is situated in the supporting electrolyte 5 of the oxidation chamber 3. The oxidizing electrode 7 is composed of an oxidation active component, and it has the function of generating protons and oxygen from water. The oxidation active component may be a precious metal, transition element, oxide, nitride, sulfide, selenide, oxynitride, thionitride or the like. Of these, precious metals are preferred from the viewpoint of stability under a strongly acidic atmosphere. Precious metals include platinum (Pt), palladium (Pd), rhodium (Rh), ruthenium (Ru), iridium (Ir) and osmium (Os). Preferred among these as active components are Pt, Rh and Ir, from the viewpoint of activity and selectivity. Transition elements include titanium (Ti), vanadium (V), chromium (Cr), manganese (Mn), iron (Fe), cobalt (Co), nickel (Ni), copper (Cu), zirconium (Zr), niobium (Nb), molybdenum (Mo), silver (Ag) and lanthanum (La). Catalysts having the aforementioned oxidation active components supported on an appropriate support are also preferred as constituent materials for the oxidizing electrode 7. The support may be one with electrical conductivity, composed of a material with a large surface area. Preferred are active carbon, carbon nanotubes, carbon nanohorns and the like, from the viewpoint of ensuring electrical conductivity and a three-phase boundary. There is no need for the entire oxidizing electrode 7 to be immersed in the supporting electrolyte 5, and it is sufficient if contact between the electrolyte 5 and the oxidizing electrode 7 is ensured.

The unsaturated compound(s) 4 (preferably a liquid unsaturated compound(s) 4) is present in the reduction chamber 2. To prevent inclusion of oxygen into the reduction chamber 2, if necessary an inert gas such as nitrogen may be supplied into the unsaturated compound(s) 4 from the exterior, through the gas tube 10.

The membrane-electrode assembly 6a has an electron collector layer 22, a reducing electrode 24 and an electrolyte membrane 20 layered in that order. The electron collector layer 22 contacts with the unsaturated compound (s) 4 present in the reduction chamber 2. The electrolyte membrane 20 contacts with the water-containing supporting electrolyte 5 present in the oxidation chamber 3. The reducing electrode 24 is sandwiched between the electrolyte membrane 20 and the electron collector layer 22, and contacts with the electrolyte membrane 20 and the electron collector layer 22. Preferably, the reducing electrode 24 is in close contact with the electrolyte membrane 20 and the electron collector layer 22.

The electrolyte membrane 20 is ion-permeable (preferably with proton conductivity). The electrolyte membrane 20 has a function of preventing mixture between the supporting electrolyte 5 in the oxidation chamber 3 and the unsaturated compound(s) 4 in the reduction chamber 2. The electrolyte membrane 20 may be a solid polymer membrane, a fluorine resin-based ion exchange membrane or a membrane comprising a liquid with ionic conductivity (such as an ionic liquid, sulfuric acid or phosphoric acid) impregnated in the pores of a porous ceramic membrane. The solid polymer membrane may be a perfluorosulfonic acid-based proton-exchange membrane, among which NAFION membranes (registered trademark of DuPont Corp.) is preferred from the viewpoint of the ion permeation rate. The thickness of the solid polymer membrane will differ depending on the conditions, but it is preferably 10 to 500 $\mu$m from the viewpoint of hydrogen ion permeability and mechanical strength. The fluorine resin-based ion exchange membrane may be an Aciplex membrane (registered trademark of Asahi Kasei Corp.) or a Flemion membrane (registered trademark of Asahi Glass Co., Ltd.).

The amount of ion-exchange groups on the solid polymer membrane, i.e. the ion-exchange capacity (IEC), is preferably 0.1 to 3.0 meq/g from the viewpoint of the ion-exchange rate and stability, and even more preferably 0.3 to 2.0 meq/g from the viewpoint of durability. When a NAFION membrane is employed as the solid polymer membrane, for example, the amount of ion-exchange groups on the solid polymer membrane is the number of moles of sulfonic acid groups per 1 g of dry NAFION. The term "meq" stands for milli-equivalents. The ion-exchange capacity of a NAFION membrane is generally 1.0 meq/g.

The electron collector layer 22 is composed of a material having conductivity and voids. The electron collector layer 22 may be, for example, carbon paper or carbon cloth. The voids in the electron collector layer 22 are constructed in such a manner as to ensure pathways through which the unsaturated compound(s) 4 can access the reducing electrode 24, and the hydride of the unsaturated compound(s) 4 can diffuse into the reduction chamber 2.

The reducing electrode 24 comprises a reduction active component, and it has a function of hydrogenating (reducing) the unsaturated compound(s) 4. The reduction active component may be a precious metal such as Pt, Pd or Ru, or a base metal such as Ni. Also, a catalyst having any of the aforementioned reduction active components supported on an appropriate support is preferred as the constituent material of the reducing electrode 24. The support may be one composed of a material with electrical conductivity and having a large surface area (for example, about 100 m$^2$/g), among which active carbon, carbon nanotubes, carbon nanohoms and carbon paper are preferred from the viewpoint of dispersibility of the reduction active component.

For this embodiment, the oxidizing electrode 7 is connected to a direct current (DC) power supply 8 via a conductor wire W. The reducing electrode 24 is connected to the DC power supply 8 via the electron collector layer 22 and a conductor wire W. The DC power supply 8 may be, for example, a renewable energy generator such as a solar photovoltaic power generator, a wind power generator, a hydroelectric power generator, a geothermal power generator or a tidal power generator. The DC power supply 8 may also be combined with a rectifier. The reducing electrode 24 for this embodiment is connected to the DC power supply 8 via the electron collector layer 22 and the conductor wire W, but there is no limitation to this construction, and for example, the conductor wire W may be directly connected to the reducing electrode 24 without passing through the electron collector layer 22.

In the hydrogenation device 1a according to the first embodiment, application of a voltage between the oxidizing electrode 7 and the reducing electrode 24 using the DC power supply 8 causes the electric potential at the oxidizing electrode 7 to be higher than the reducing electrode 24, and the oxygen ions (O$^{2-}$) from water are oxidized on the surface of the oxidizing electrode 7, generating oxygen while also generating protons from the water. The protons generated inside the oxidation chamber 3 migrate to the membrane-electrode assembly 6a by the difference in the electric potential between the oxidizing electrode 7 and the reducing electrode 24, passing through the electrolyte 20 and reaching the reducing electrode 24. On the other hand, the unsaturated compound(s) 4 in the reduction chamber 2 passes through the electron collector layer 22 and reaches the reducing electrode 24. Also, the unsaturated compound(s) 4 is hydrogenated (reduced) by the protons that have reached the reducing electrode 24 and electrons supplied from the reducing electrode 24, being converted to an organic hydride.

Thus, in the hydrogenation device 1a according to the first embodiment, oxygen is generated at the oxidizing electrode 7, while electrons supplied to the reducing electrode 24 from the oxidizing electrode 7 and protons generated inside the oxidation chamber 3 react with the unsaturated compound(s) 4, resulting in hydrogenation of the unsaturated compound(s) 4. In other words, in the hydrogenation device 1 a according to the first embodiment, it is possible to add water-derived hydrogen to the unsaturated compound(s) 4 by using renewable energy as an energy source to form an organic hydride, essentially without generating hydrogen gas by electrolysis of water.

The hydrogenation reaction of the organic compound(s) according to the first embodiment can be represented by the following chemical reaction formula (1).

$$U(n) + xH_2O \rightarrow U(n\text{-}x) + (x/2)O_2 \qquad (1)$$

In formula (1), U(n) represents the unsaturated compound(s), n is an integer of 1 or greater representing the number of unsaturated bonds in U(n), x is an integer of between 1 and n, U(n-x) represents U(n) with 2x hydrogens added, and n-x is an integer representing the number of unsaturated bonds in U(n-x). When U(n) has been completely hydrogenated, x is equal to n, and U(n-x) is U(0), i.e. the compound(s) is free of unsaturated bonds.

The value of $\Delta H$ (change in reaction enthalpy) in the electrolysis reaction of water represented by the following formula (2) is 285.8 kJ/mol, and the minimum applied voltage Vmin between the oxidizing electrode and reducing electrode required for the water electrolysis reaction is 1.23 Volt. On the other hand, as shown in Table 1, $\Delta H$ in the hydrogenation reaction of the liquid unsaturated compound(s) according to the first embodiment is smaller than $\Delta H$ in the water electrolysis reaction. In addition, the minimum applied voltage Vmin between the oxidizing electrode and reducing electrode required for hydrogenation reaction of the unsaturated compound(s) for the first embodiment is lower than the 1.23 Volt in the water electrolysis reaction. That is, in the hydrogenation device 1a according to the first embodiment, hydrogenation of organic compounds can be carried out at lower energy (low applied voltage) compared to water electrolysis reaction. The values of $\Delta H$ and minimum applied voltage in the water electrolysis reaction and the hydrogenation reaction shown in Table 1 are the values assuming a reaction system temperature of 25°C. The $H_2O$ in formula (2) is liquid, and $H_2$ and $O_2$ are gases. The $\Delta H$ values in Table 1 are the changes in reaction enthalpy of the hydrogenation reaction of the unsaturated compounds, averaged by the number of hydrogen pairs added to the unsaturated compound(s). The unsaturated compounds and hydrides listed in Table 1 are all liquids.

$$H_2O \rightarrow H_2 + (1/2)O_2 \ (2)$$

[Table 1]

| Unsaturated compound | Hydrogenated compound | $\Delta H$ (kJ/mol·2H) | Vmin (Volt) |
|---|---|---|---|
| Toluene | Methylcyclohexane | 220.1 | 1.08 |
| Benzene | Cyclohexane | 220.0 | 1.06 |
| Naphthalene | Decalin | 222.6 | 1.09 |
| Acetone | Isopropyl alcohol | 215.3 | 1.10 |

In the hydrogenation device 1a according to the first embodiment, it is possible to fix renewable energy as chemical substances in a more efficient manner than the prior art, since it requires essentially no generation of hydrogen gas by water electrolysis. Consequently, in the hydrogenation device 1a according to the first embodiment, it is not necessary to provide a reactor for generation of hydrogen gas by water electrolysis, separately from the reactor for hydrogenation. In addition, in the hydrogenation device 1a according to the first embodiment, the unsaturated compound (s) (organic hydride) which is a liquid under operating conditions can be utilized as an energy carrier (hydrogen carrier), and hence there is virtually no energy loss during transfer between organic hydride containers, and there is no need to use an apparatus for compression or liquefaction, unlike compressed hydrogen or liquefied hydrogen. In other words, the hydrogenation device 1a according to the first embodiment reduces the energy loss that occurs with storage and transport of electric power, and allows the apparatus to be downsized, compared to the prior art.

In the hydrogenation device 1a according to the first embodiment, partitioning the oxidation chamber 3 and reduction chamber 2 with the membrane-electrode assembly 6a allows separation and extraction of the hydride of the unsaturated compound(s) 4, when the hydride has been produced at high yield in the reduction chamber 2.

Conventional hydrogenation of unsaturated compounds using high-pressure hydrogen gas has required many devices including a compressor, heat exchanger, distillation column and gas-liquid separator. Thus, a small-sized hydrogenation device is economically disadvantageous, while larger-sized apparatuses are more advantageous. On the other hand, since renewable energy originally has low energy density, electric power generation plants that utilize renewable energy are on a trend toward smaller sizes. Therefore, it is preferred for renewable energy storage devices to likewise be easily down-sizable. In this regard, since the hydrogenation device 1a according to the first embodiment that does not employ high-pressure hydrogen gas can have a simple structure and be provided on a small scale, it is easily suited as a storage device for renewable energy.

<Liquid organic compound(s) with unsaturated bonds>

For the purpose of the first embodiment, an organic compound(s) with unsaturated bonds is an organic compound(s) that has one or more double bonds or triple bonds in the molecule and that is liquid at ordinary temperature, ordinary pressure. Examples of double bonds include carbon-carbon double bonds, carbon-nitrogen double bonds, carbon-oxygen double bonds and nitrogen-oxygen double bonds, such as C=C, C=N, C=O and N=O. Examples of triple bonds include carbon-carbon triple bonds and carbon-nitrogen triple bonds. The organic compound(s) with unsaturated bonds is preferably a liquid organic compound(s) from the viewpoint of storage properties and transport properties.

Examples of unsaturated compounds include olefins, dienes, acetylenes and aromatic compounds. Examples of aromatic compounds include aromatic compounds with 3- to 14-membered rings (usually aromatic compounds with six-membered rings), polycyclic aromatic compounds having multiple fused aromatic rings, aromatic compounds with substituents such as alkyl groups, and aromatic compounds including hetero atoms such as N. The aromatic compound is preferably a liquid aromatic compound(s).

Specific examples of unsaturated compounds include olefins, dienes, acetylenes, benzene, carbon chain-substituted aromatic compounds, hetero-substituted aromatic compounds, polycyclic aromatic compounds, Schiff bases, hetero aromatic compounds, hetero 5-membered ring compounds, quinones, ketones and the like. Olefins include ethylene, propylene, butene, pentene, hexene, heptene, octene, nonene, decene, undecene, dodecene and the like. Dienes include arenes, butadiene, pentadiene, hexadiene, heptadiene, octadiene, piperylene, isoprene and the like. Acetylenes include acetylene, propyne and vinylacetylene. Carbon chain-substituted aromatic compounds include alkyl-substituted aromatic compounds. Alkyl-substituted aromatic compounds include toluene, xylene, trimethylbenzene, ethylbenzene, cumene and benzoic acid. Hetero-substituted aromatic compounds include anisole, dimethoxybenzene, phenol, aniline and N,N-dimethylaniline. Polycyclic aromatic compounds include naphthalene, methylnaphthalene, anthracene, tetracene, phenanthrene, tetralin and azulene. Schiff bases include 2-aza-hept-1-en-1-yl-cyclohexane. Hetero aromatic compounds include pyridine, pyrimidine, quinoline and isoquinoline. Hetero 5-membered ring compounds include furan, thiophene, pyrrole and imidazole. Quinones include benzoquinone and naphthoquinone. Ketones include acetone and methyl ethyl ketone. Needless to mention, carbon dioxide and carbon monoxide have unsaturated bonds but are generally not considered to be organic compounds, and these are therefore excluded from the unsaturated compounds according to the first embodiment.

Of these aforementioned unsaturated compounds, benzene, toluene, xylene, ethylbenzene, naphthalene, methylnaphthalene and tetralin (hereunder also referred to as "benzenes") are water-insoluble before and after hydrogenation, and phase separable with water, and therefore they are more preferred over water-soluble organic compounds such as acetone, in that they can be very easily recovered as products. For the same reason, the unsaturated compound(s) 4 and the hydrogenation product (hydride of the unsaturated compound(s) 4) in the reduction chamber 2 are preferably both present as liquids. These benzenes may be used as the pure compounds, or as mixtures of multiple compounds.

The benzenes are hydrogenated in the reduction chamber 2, but preferably control is conducted during operation of the hydrogenation device 1a to minimize the presence of liquid water in the reduction chamber 2, from the viewpoint of limiting reduction in activity of the hydrogenation catalyst in the MEA.

As explained below, the unsaturated compound(s) 4 is converted to the reduced compound(s) (organic hydride) as its unsaturated bonds are hydrogenated by the water-derived hydrogen in the reducing electrode 24. That is, according to the invention it is possible to store hydrogen in the form of an organic hydride. In this hydrogenation, it is not necessary for all of the unsaturated bonds of the unsaturated compound(s) to be reduced. For example, naphthalene may be reduced to tetralin, and benzoquinone may be reduced to hydroquinone.

The unsaturated compound(s) 4 in the hydrogenation reactor 1a is preferably in a liquid state. In other words, hydrogenation of the unsaturated compound(s) 4 is conducted in a liquid state. This eliminates the need for a vaporizer, condenser or the like, and allows the equipment to be downsized. For the same reason, the unsaturated compound(s) 4 and the hydrogenation product in the reduction chamber 2 are preferably both present as liquids.

After transporting the reduced compound(s) of the unsaturated compound(s) to a desired location as a hydrogen storage substance, it is used as an energy source and converted to mechanical power or electric power. There are no particular restrictions on the usage of the reduced compound(s), and for example, the reduced compound(s) may be used as a starting material for generation of hydrogen. Specifically, methods exist for obtaining electric power from fuel cells wherein the fuel is hydrogen obtained by dehydrogenation of the reduced compound(s), in the presence of an appropriate catalyst (see Ichikawa, Nenryo Denchi, Vol. 1(2), 44(2001), for example). Methods also exist using reduced compounds directly as fuels for fuel cells (see Physical Chemistry Chemical Physics, 8, 1724-1730(2006), Z. Shi, J. Power Sources, 176, 122-127(2008), USP2008/0152960, for example).

The oxygen produced during hydrogenation of the unsaturated compound(s) may be consumed by any desired method, such as in assisted respiration, as a combustion aid or as a chemical starting material, or it may be released into the atmosphere.

In the prior art, hydrogen gas has been synthesized by electrolysis of water using electric power obtained from renewable energy, such as solar photovoltaic power generation, or by photodecomposition of water. In addition, hydrogen gas has been converted into the form of liquefied hydrogen or compressed hydrogen in the prior art, for storage and transport. However, liquefied hydrogen must be held at cryogenic temperature, and compressed hydrogen must be held under high pressure. Thus, storage and transportation of renewable energy in the form of liquefied hydrogen or compressed hydrogen are associated with high energy loss and large equipment sizes. In the hydrogenation method according to the first embodiment, however, renewable energy is converted to the form of an organic hydride storing hydrogen. Organic hydrides exist as more stable liquids at ordinary temperature, ordinary pressure, compared to hydrogen, and therefore their storage and transport are easier. Thus, the hydrogenation method according to the first embodiment produces organic hydrides as clean, high energy substances derived from renewable energy sources in regions that are rich in renewable energy but very far from energy consumption areas, and allows them to be easily stored and transported to consumption areas.

<Method of fabricating membrane-electrode assembly>

An electrolyte membrane 20 was attached to the reducing electrode 24 side of an electron collector layer 22 having a reducing electrode 24 formed on one side thereof, and was pressed while heating by a hot press method, to obtain a membrane-electrode assembly 6a. Using the hot press method results in airtight attachment inside the membrane-electrode assembly 6a. The steps of connecting the conductor wire W and collector layer 22 may be carried out either before or after the hot press method.

[Second embodiment]

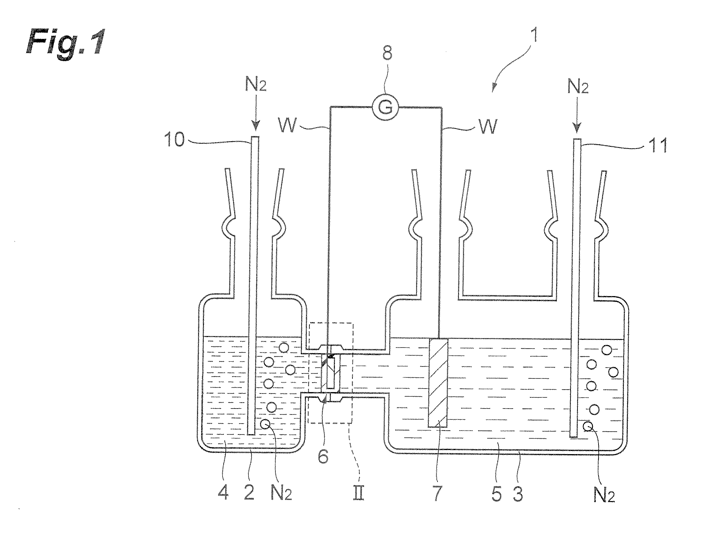

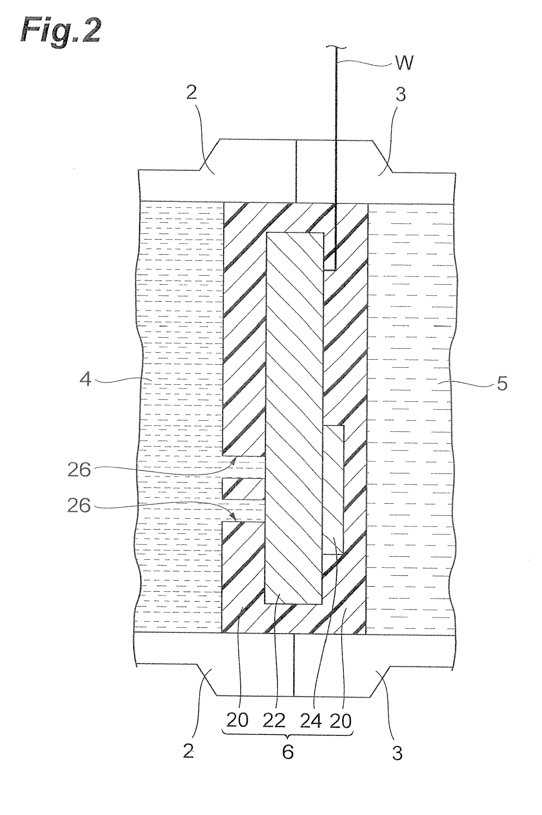

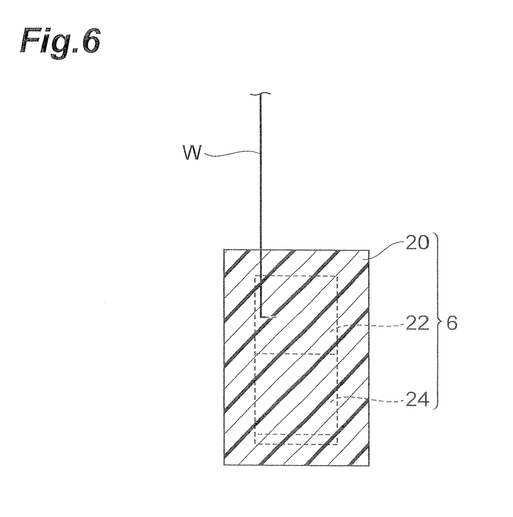

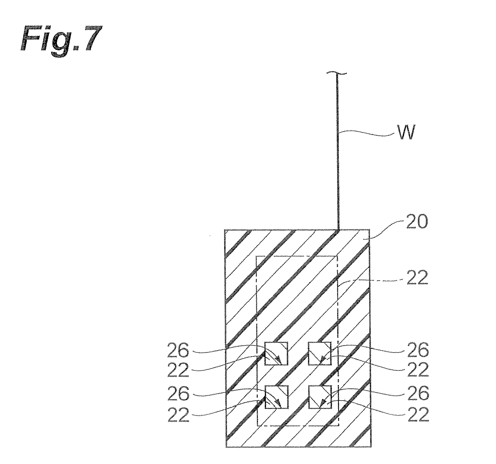

A hydrogenation device 1 according to the second embodiment of the invention, illustrated in Fig. 1 and Fig. 2, and a hydrogenation method for an unsaturated compound(s) 4 using the device 1, will now be described. The hydrogenation device 1 according to the second embodiment is similar to the hydrogenation device 1a according to the first embodiment, except that it employs a membrane-electrode assembly 6 as illustrated in Figs. 1, 2, 6 and 7, instead of the membrane-electrode  assembly 6a shown in Fig. 11 and Fig. 12 used in the hydrogenation device 1a according to the first embodiment. Aspects of the membrane-electrode assembly 6 of the hydrogenation device 1 according to the second embodiment will now be explained. Aspects that are common to the hydrogenation device 1a according to the first embodiment and the hydrogenation device 1 according to the second embodiment will not be explained. The membrane-electrode assembly 6 of the hydrogenation device 1 according to the second embodiment has higher adhesiveness (airtightness) between the electron collector layer 22, reducing electrode 24 and electrolyte membrane 20, and more excellent mechanical strength, compared to the membrane-electrode assembly 6a of the hydrogenation device 1a according to the first embodiment. Thus, the hydrogenation device 1 according to the second embodiment can easily prevent mixture between the contents of the reduction chamber 2 (the unsaturated compound(s) 4 or its hydride) and the electrolyte 5 in the reducing electrode 24.

(Organic compound hydrogenation device and hydrogenation method)

The membrane-electrode assembly 6 comprises an electron collector layer 22, a reducing electrode 24 and an electrolyte membrane 20. The reducing electrode 24 is formed on the side of the surface of the electron collector layer 22 that is facing the electrolyte 5 inside the oxidation chamber 3 (the facing surface). The electrolyte membrane 20 covers the electron collector layer 22 and reducing electrode 24, and contacts with the electron collector layer 22 and reducing electrode 24. Preferably, the electrolyte membrane 20 is in close contact with the  electron collector layer 22 and the reducing electrode 24.

Openings 26 are formed on a section of the electrolyte membrane 20 located on the side opposite from the reducing electrode 24 sandwiching the electron collector layer 22. The openings 26 face the interior of the reduction chamber 2. The back side of the section of the electron collector layer 22 on which the reducing electrode 24 has been formed (the section opposite from the reducing electrode 24) alone is exposed through the openings 26. The electron collector layer 22 exposed through the opening 26 contacts with the unsaturated compound(s) 4 inside the reduction chamber 2. The openings 26 function as inlets for the saturated compound(s) 4.

In the hydrogenation device 1 according to the second embodiment, application of a voltage between the oxidizing electrode 7 and the reducing electrode 24 using the power supply 8 causes the electric potential at the oxidizing electrode 7 to be higher than the reducing electrode 24, and the oxygen ions ($O^{2-}$) from water are oxidized on the surface of the oxidizing electrode 7, generating oxygen while also generating protons from the water. The protons generated inside the oxidation chamber 3 migrate to the membrane-electrode assembly 6 by the difference in the electric potential between the oxidizing electrode 7 and the reducing electrode 24, passing through the electrolyte 20 and reaching the reducing electrode 24. On the other hand, the unsaturated compound(s) 4 in the reduction chamber 2 passes through the electron collector layer 22 via the openings 26, and reaches the reducing electrode 24. Also, the unsaturated compound(s) 4 is hydrogenated (reduced) by the protons that have reached the reducing  electrode 24 and electrons supplied from the reducing electrode 24.

Thus, in the hydrogenation device 1 according to the second embodiment, oxygen is generated at the oxidizing electrode 7, while electrons supplied to the reducing electrode 24 from the oxidizing electrode 7 and protons generated inside the oxidation chamber 3 react with the unsaturated compound(s) 4, resulting in hydrogenation of the unsaturated compound(s) 4. In other words, in the hydrogenation device 1 according to the second embodiment, it is possible to add water-derived hydrogen directly to the unsaturated compound(s) 4 by using renewable energy as an energy source to form an organic hydride, essentially without generating hydrogen gas by electrolysis of water.

<Method of fabricating membrane-electrode assembly>

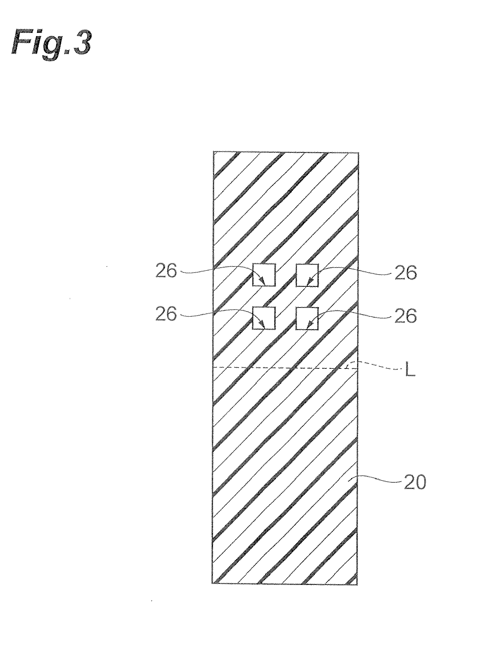

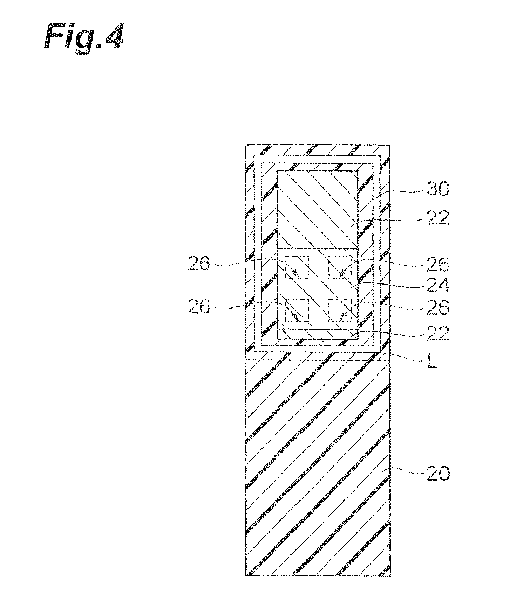

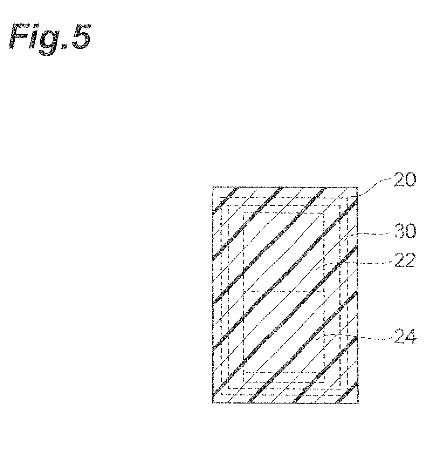

As shown in Fig. 3, openings 26 are formed in a longitudinal electrolyte membrane 20. As shown in Fig. 4, the electron collector layer 22 having the reducing electrode 24 formed on one side thereof is situated on one half of the electrolyte membrane 20, and the electron collector layer 22 and reducing electrode 24 overlap entirely over the openings 26. A bonding agent 30 is coated onto the electrolyte membrane 20, surrounding the electron collector layer 22. As shown in Fig. 4 and Fig. 5, when the electrolyte membrane 20 is folded along a folding line L dividing the electrolyte membrane 20 in half in the longitudinal direction, and attached, the electron collector layer 22, reducing electrode 24 and bonding agent 30 become sandwiched by the electrolyte membrane 20. The folded electrolyte membrane 20 is pressed while heating by a hot press method, to obtain a membrane-electrode assembly 6. Using the hot press method results in airtight attachment inside the membrane-electrode assembly 6. The steps of connecting the conductor wire W and collector layer 22 may be carried out either before or after the hot press method.

Examples

The present invention will now be explained in greater detail through the following examples, with the understanding that these examples are in no way limitative on the invention.

<Fabrication of membrane-electrode assembly>

As shown in Fig. 3, four openings 26 were formed in a longitudinal electrolyte membrane 20. The dimensions of the openings 26 were 0.5 cm $\times$ 0.5 cm. The electrolyte membrane 20 used was a NAFION membrane, imbibed with a 5% Nafion suspension. The dimensions of the electrolyte membrane 20 were 2.5 cm $\times$ 7.0 cm. The thickness of the electrolyte membrane 20 was 178 $\mu$m (0.007 inch).

As shown in Fig. 4, the electron collector layer 22 having the reducing electrode 24 coated and formed on one side thereof, was situated on one half of the electrolyte membrane 20, and the electron collector layer 22 and reducing electrode 24 were overlapped over the entire opening 26. The electron collector layer 22 having the reducing electrode 24 coated and formed on one side thereof was a fuel cell electrode (product of Chemix, Inc.). The electron collector layer 22 of the fuel cell electrode was made of carbon paper. The reducing electrode 24 was Pt supported on carbon black (hereunder referred to as "Pt/C catalyst"). The platinum loading weight with respect to the carbon paper was 2.0 g/cm$^2$.

As shown in Fig. 4, a bonding agent 30 was coated onto the electrolyte membrane 20, surrounding the electron collector layer 22. The bonding agent 30 used was an epoxy-based bonding agent.

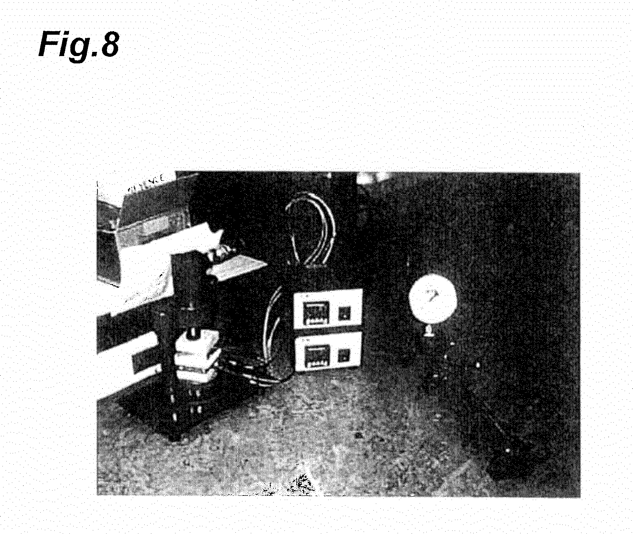

As shown in Fig. 4 and Fig. 5, the electrolyte membrane 20 was folded along the folding line L, sandwiching the electron collector layer 22, reducing electrode 24 and bonding agent 30, and the folded electrolyte membrane 20 was pressed while heating by a hot press method. A hot press machine as shown in Fig. 8 was used for the hot press method. In the hot press method, the folded electrolyte membrane 20 was heated at 130°C while applying a pressure of 23 MPa onto the electrolyte membrane 20 for 1 minute.

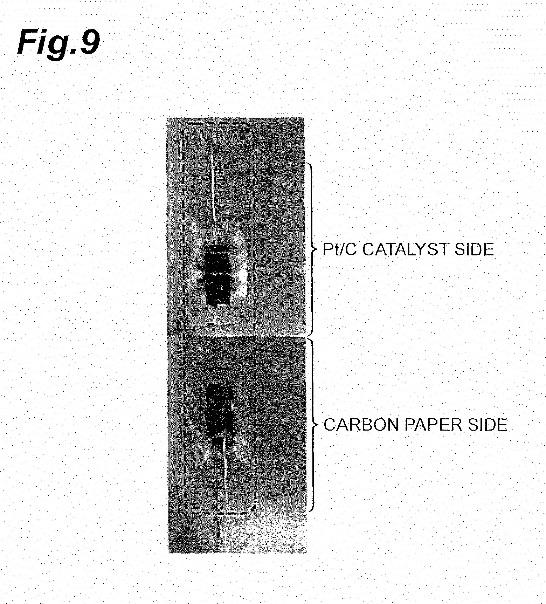

After carrying out the hot press method, a section of the electrolyte membrane 20 was cut out, a conductor wire W was connected to the electron collector layer 22, and the cut section was sealed with an epoxy-based bonding agent to obtain a MEA 4 as a membrane-electrode assembly 6 (see Figs. 2, 6, 7 and 9).

<Hydrogenation device>

A hydrogenation device 1 as illustrated in Fig. 1 and Fig. 2 was fabricated. A 100 ml of 0.1 M $H_2SO_4$ aqueous solution was used as the supporting electrolyte solution 5 in the oxidation chamber 3. Also, 4 ml of toluene (product of Wako Corp., purity: 99.8%) was used as the liquid unsaturated compound(s) 4 in the reduction chamber 2. No liquid water was found in the reduction chamber 2 during this time. A Pt wire was used as the oxidizing electrode 7. The MEA 4 described above was used as the membrane-electrode assembly 6.

<Hydrogenation of toluene>

After applying an electric potential of -0.3 $V_{RHE}$, using an  electrochemical measuring system (potentiostat) for 108 hours, between the oxidizing electrode 7 and reducing electrode 24 of the hydrogenation device 1 comprising the MEA 4, an electric potential of -1.24 $V_{RHE}$ was applied for 17 hours. The electrochemical measuring system used was an HZ-5000 by Hokuto Denko Corp.

During application of the electric potential, generation of oxygen gas from the surface of the oxidizing electrode 7 was visually confirmed. Lack of generation of air bubbles (hydrogen gas) in the reduction chamber 2 was also visually confirmed during application of the electric potential.

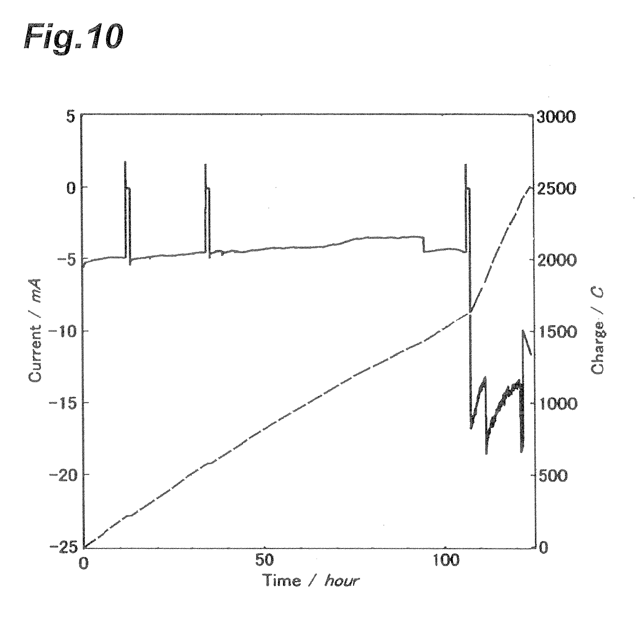

Changes in the current value between the oxidizing electrode 7 and the reducing electrode 24 were also monitored during application of the electric potential, using an electrochemical measuring system (Model HZ-5000 by Hokuto Denko Corp.). Flow of current was confirmed, as a result, as indicated by the solid line in Fig. 10.

After completing 125 hours of application of the potential, the unsaturated compound(s) 4 in the reduction chamber 2 was subjected to gas chromatography analysis with a gas chromatograph (Model: GC-2014 by Shimadzu Corp.).

Conditions for the gas chromatography analysis were as follows.

Column: J&W SCIENTIFIC CATALOG 1223232, DB-FFAP 30 m 0.25 nm 0.25U
Mobile phase: Nitrogen
Injection volume: 3 $\mu$L
Flow rate: 2.84 mL/min
Methylcyclohexane retention time: 1.4 minutes
Toluene retention time: 4.5 minutes

As a result of quantification by the gas chromatography analysis, $5.1 \times 10^{-3}$ mol of methylcyclohexane (reduction rate: 13.7%) was confirmed to be produced in the toluene in the reduction chamber 2. The integrated electric charge, determined from the change in the current integrated value (broken line shown in Fig. 10), was $4.3 \times 10^{-3}$ mol (reduction rate: 11.5%). Despite some differences in the integrated electric charge and methylcyclohexane production amount, this may be considered to be a high degree of matching between them, taking into account the measuring precision.

Thus, in the examples using the MEA 4 , it was confirmed that application of a electric potential between the oxidizing electrode 7 and reducing electrode 24 generates oxygen at the oxidizing electrode 7 while hydrogenating toluene at the MEA 4 (membrane-electrode assembly 6) comprising the reducing electrode 24, generating methylcyclohexane.

**Industrial Applicability**

According to the invention it is possible to store hydrogen essentially without generating hydrogen gas, and therefore the present invention is suitable for fixing and storage of hydrogen using renewable energy generators, such as solar photovoltaic power generators, wind power generators, hydroelectric power generators, geothermal power generators and tidal power generators.

**Reference Signs List**

1, 1a: Hydrogenation devices, 2: reduction chamber, 3: oxidation chamber, 4: liquid organic compound(s) with unsaturated bond, 5: water-containing supporting electrolyte, 6, 6a: membrane-electrode assemblies, 7: oxidizing electrode, 8: DC power supply, 20: electrolyte membrane, 22: collector layer, 24: reducing electrode, 26: opening, 10, 11: gas tube.

**Claims**

**1.** An organic compound(s) hydrogenation device comprising:

an oxidation chamber that holds a water-containing electrolyte,
a reduction chamber that holds an organic compound(s) with an unsaturated bond,
an electrolyte membrane with ion permeability, separating the electrolyte held in the oxidation chamber from the organic compound(s) held in the reduction chamber,
an oxidizing electrode that generates protons from the water held in the oxidation chamber, and

a reducing electrode that hydrogenates the organic compound(s) held in the reduction chamber.

2. An organic compound(s) hydrogenation device comprising:

an oxidation chamber that holds a water-containing electrolyte,
a reduction chamber that holds an organic compound(s) with an unsaturated bond,
a proton conductive electrolyte membrane separating the interior of the oxidation chamber from the interior of the reduction chamber,
an oxidizing electrode situated in the oxidation chamber, and
a reducing electrode adjacent to the electrolyte membrane, contacting with the organic compound(s) in the reduction chamber to hydrogenate the organic compound(s).

3. The organic compound(s) hydrogenation device according to claim 1 or 2, comprising a membrane-electrode assembly having an electron collector layer that allows permeation of the organic compound(s), the reducing electrode, and the electrolyte membrane,
wherein the reducing electrode is situated between the electron collector layer and the electrolyte membrane,
the electrolyte membrane covers the electron collector layer and the reducing electrode, and has an opening exposing the section of the side of the electron collector layer opposite the reducing electrode.

4. The organic compound(s) hydrogenation device according to claim 1 or 2, comprising a membrane-electrode assembly having an electron collector layer that allows permeation of the organic compound(s), the reducing electrode being formed on one side of the electron collector layer, and the electrolyte membrane covering the electron collector layer and the reducing electrode,
wherein an opening is formed on a section of the electrolyte membrane located on the side opposite the reducing electrode sandwiching the electron collector layer,
the opening faces the inside of the reduction chamber, and
the back side of the section of the electron collector layer on which the reducing electrode has been formed is exposed through the opening.

5. The organic compound(s) hydrogenation device according to any one of claims 1 to 4, comprising a power source that applies a voltage to the oxidizing electrode and the reducing electrode.

6. The organic compound(s) hydrogenation device according to claim 5, comprising:

a conductor wire that connects the oxidizing electrode and the power source, and
a conductor wire that connects the reducing electrode and the power source.

7. An organic hydrogenation method employing a hydrogenation device according to any one of claims 1 to 6, wherein:

a voltage is applied to the oxidizing electrode and the reducing electrode through the conductor wires, causing generation of oxygen at the oxidizing electrode and hydrogenation of the organic compound(s) at the reducing electrode.

8. The organic hydrogenation method according to claim 7, wherein the organic compound(s) is at least one selected from the group consisting of benzene, toluene, xylene, ethylbenzene, naphthalene, methylnaphthalene and tetralin.

9. The organic hydrogenation method according to claim 7, wherein the organic compound(s) is a liquid hydrocarbon that undergoes phase separation with water.

10. The organic hydrogenation method according to claim 7, wherein the organic and a hydride of the organic compound(s) in the reduction chamber are both present as liquids.

11. The organic hydrogenation method according to claim 7, which maintains inclusion of water into the reduction chamber at a minimum.

*Fig.1*

*Fig.2*

*Fig.3*

**Fig.4**

Fig.5

**Fig.6**

# Fig.7

*Fig.8*

*Fig.9*

Pt/C CATALYST SIDE

CARBON PAPER SIDE

*Fig.10*

*Fig.11*

EP 2 660 356 A1

*Fig.12*

## INTERNATIONAL SEARCH REPORT

| | International application No. |
|---|---|
| | PCT/JP2011/080487 |

A. CLASSIFICATION OF SUBJECT MATTER
*C25B9/00*(2006.01)i, *C01B3/00*(2006.01)i, *C07C5/10*(2006.01)i, *C07C13/18*
(2006.01)i, *C25B3/04*(2006.01)i, *C07B61/00*(2006.01)n

According to International Patent Classification (IPC) or to both national classification and IPC

B. FIELDS SEARCHED

Minimum documentation searched (classification system followed by classification symbols)
C25B9/00, C01B3/00, C07C5/10, C07C13/18, C25B3/04, C07B61/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 52-045707 B1 (Akira MISONOU),<br>17 November 1977 (17.11.1977),<br>page 1, right column, line 30 to page 3, right<br>column, line 15<br>(Family: none) | 1,5-11<br>2-4 |
| X<br>A | JP 08-246177 A (Director General, Agency of<br>Industrial Science and Technology),<br>24 September 1996 (24.09.1996),<br>paragraphs [0004] to [0011]<br>(Family: none) | 1-2,5-11<br>3-4 |
| A | JP 10-195686 A (Permelec Electrode Ltd.),<br>28 July 1998 (28.07.1998),<br>entire text<br>(Family: none) | 1-11 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 29 February, 2012 (29.02.12) | 13 March, 2012 (13.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP 2003045449 A
- JP 2005126288 A
- JP 2005239479 A
- JP 2005511075 A
- US P20080152960 A

**Non-patent literature cited in the description**

- **ICHIKAWA MASARU.** *J. Jpn. Inst. Energy,* 2006, vol. 85, 517
- **ICHIKAWA.** *Nenryo Denchi,* 2001, vol. 1 (2), 44
- *Physical Chemistry Chemical Physics,* 2006, vol. 8, 1724-1730
- **Z. SHI.** *J. Power Sources,* 2008, vol. 176, 122-127